# EUROPEAN PATENT APPLICATION

(11) **EP 2 642 252 A1**
(43) Date of publication of application: **25.09.2013**
(21) Application number: 12160863.2
(22) Date of filing: 22.03.2012
(51) Int. Cl.: G01D 5/245

(54) **Magnetic position encoder**

(71) Applicant: Schleifring und Apparatebau GmbH, 82256 Fürstenfeldbruck (DE)
(72) Inventor: Weithmann, Herbert, 80999 München (DE); Schraudolf, Christian, 82275 Emmering (DE)
(74) Representative: Lohr, Georg

(57) **Abstract**

A position encoder gauge (10) comprises of a metal tape of magnetic material having first segments (18) and different second segments (19) to be detected by a sensor (30). The metal tape can be formed to any shape and specifically to any diameter. It easily can compensate for thermal expansion of the body (20) it is mounted to.

## Description

### Field of the invention

The invention relates to magnetic angle or position encoders. Such magnetic encoders may be used in the rotating machines like motors, drives or even large machines like in CT scanners for determining the position or rotational angle. They may further be used in linear moving systems like linear drives for measuring linear displacement.

### Description of the related art

Generally, there are various types of position encoders which are almost based on a structured gauge which is movable against a sensor. The sensor may be an optical or magnetic or any other kind of sensor which is able to detect structures of the gauge. Magnetic sensors are in generally more robust compared to optical sensors as the magnetic fields can easily penetrate any debris on the surface of the sensor, while such debris would make the optical sensor unusable.

US patent 6,160,499 discloses a magnetic encoder, where the gauge is a disc made of a magnetic substance, having a plurality of slits for detecting the position thereof. Such an encoder disc has a comparatively simple structure and it may be manufactured by punching or laser cutting. It can be easily made for small diameters, but manufacturing such a disc for large machines like a CT scanner having a diameter of 1.5 m causes significant problems. Furthermore, there is a significant thermal expansion of the gauge, which may be different from other structures of the CT scanner, where the gauge is mounted to. Therefore the gauge must be mounted by using some resilient material, which further may lead to tolerances in detecting the position and in a run out.

A different type of magnetic angle encoder is disclosed in US patent 4,742,332. There a solid ring gear is used. It is obvious that such a ring gear is not applicable in large machines like a CT scanner.

### Summary of the invention

The problem to be solved by the invention is to find a magnetic position encoder which may easily be applied to large machines like a CT scanners, which may be produced for low-cost, allows for precise measurements and has a good long term stability, withstanding thermal expansion compared to the structure, the position encoder is mounted to.

Solutions of the problem are described in the independent claims. The dependent claims relate to further improvements of the invention.

The inventive position encoder comprises of a gauge being made of a tape of magnetic material, further referred as encoder tape. The encoder tape may be in any desired form having at least second segments which are closer to a sensor and first segments which are distant from a sensor. Preferably the encoder tape comprises of iron or iron alloy. The encoder tape preferably comprises soft magnetic material. It may also comprise permanent magnetic material.

The encoder tape can be formed to a ring with defined tooth count and length and the ends welded electrically or with a laser.

By mounting the tape in a slightly wider groove the axial alignment of a circular tape can be guaranteed.

The encoder tape may be bent to any radius and therefore easily adapted to any diameter. Due to its form it can easily expand or compress, if its thermal expansion is different compared to the body it is mounted to. Therefore it easily can compensate for any thermal expansion or compression.

It is further preferred, if the encoder tape is attached to a structure or body by means of an adhesive tape.

There may be also provided at least one closure means to connect two ends of the encoder tape.

In an alternate embodiment the encoder tape may be mounted into a groove.

As the encoder tape is flexible, it is preferred, when a rigid gauge is used for mounting the encoder tape. For mounting the encoder tape may be pressed to or inserted into the rigid gauge.

Generally the position encoder tape disclosed herein may either be applied to rotating devices like motors or CT scanners or to linear moving devices. Accordingly it may act as a position encoder tape or as an angular encoder tape. Furthermore it may be used with optical sensors, although magnetic sensors are preferred

The encoder tape position can be evaluated by magnetic sensors (e.g. hall sensors or resisitive sensors) by measuring the field distortion of a magnet (permanent magnet or electrical coil) by the tape which has magnetic properties (µ>1).

The encoder tape may be used to detect speed and position by configuring it to a quadrature encoder with a magnet for each sensor that applies a field radial to the circular tape or perpendicular to a linear tape. The sensors are placed between magnet and tape close to the tape and measure and signal the field strength. The sensor can measure the absolute field or if internally configured as a measurement bridge the field gradient and generate a digital signal by comparing the analog signal with a defined threshold.

By placing two sensors by n+1/4 pitch apart (pitch beeing the mechanical period of the tape structure, n beeing a natural number) two signals may be created and the direction of rotation may be detected by the phase shift between the two sensor outputs, the speed of the rotation by the repetition rate of a sensor signal and the position by defining a separate track as zero mark or home puls and by counting the ticks of the sensors after crossing the zero mark. This can be evaluated similarly, the zero mark can be a seperately mounted part with magnetic properties similar to the tape.

To get a defined position of the tape in regard to the zero mark the tape may have a punched or lasered hole to mount a pin to align the tape with the circular structure it is mounted to. The zero mark could be also defined by a defined violation of the pitch or regular pattern, e.g. by changing the pitch for a short distance or by creating a longer nose or recess.

### Description of Drawings

In the following the invention will be described by way of example, without limitation of the general inventive concept, on examples of embodiment with reference to the drawings.
Figure 1 shows a position encoder tape according to invention.
Figure 2 shows the position encoder with a sensor.
Figure 3 shows the position encoder in a further view.
Figure 4 shows different position encoder tapes.
Figure 5 shows the encoder tape mounted to a CT scanner gantry.
Figure 6 shows a perspective view of a position encoder tape.

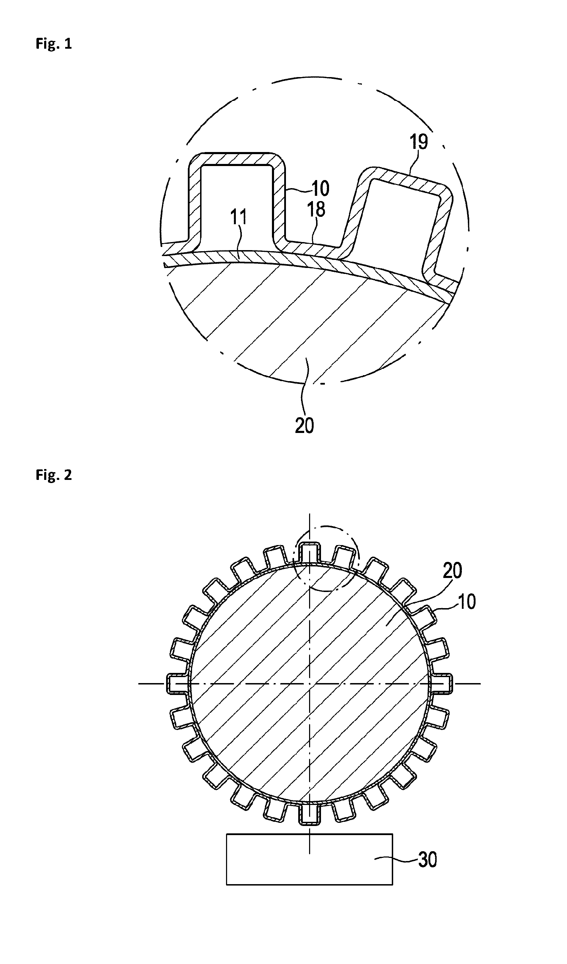

In figure 1 a position encoder tape according to the invention is shown. The encoder tape 10 is mounted to a body of a rotating device 20 which may be part of the CT scanner or of a motor. It has first segments 18 which are distant to a sensor and second segments 19 which are closer to a sensor mounted outside of the encoder tape. The encoder tape 10 may be mounted by means of an adhesive tape 11 to the body 20 of the rotating device.

In figure 2 the position encoder tape 10 is shown mounted to a body 20 of a rotating device, like a motor shaft and a magnetic sensor 30 which is picking up the magnetic flux variations caused by the encoder tape and specifically delivering different signals, dependent of the type of segments being in front of the magnetic sensor. For example the magnetic sensor may deliver logic "1", if second segments are in front of the sensor and it may deliver logic "0" if first segments are in front of the sensor. Furthermore a second encoder tape and a second magnetic sensor may be provided displaced to the first sensor, so that the direction of movement or rotation may be detected. Optionally a further encoder tape having only one second segment may be provided for giving an absolute position indication.

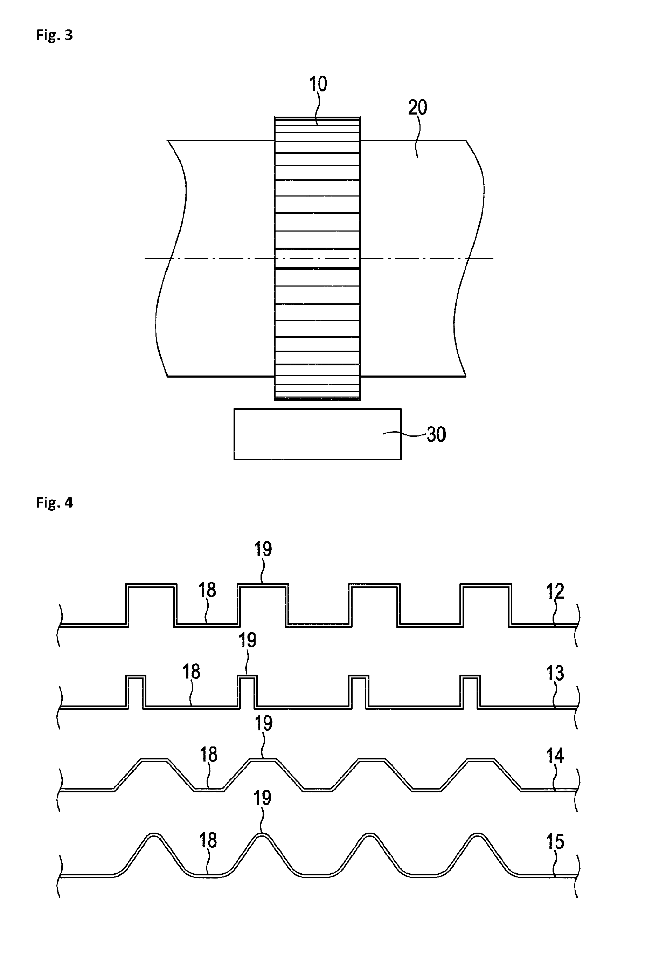

In figure 3 the position encoder of the previous figure is shown in another view.

In figure 4 different position encoder tapes are shown. A symmetrical rectangular encoder tape 12 will deliver symmetrical output signals at the sensor. It is essential for the encoder tapes to have second segments 19 and first segments 18, which are differently distant from the sensor, when passing the sensor. The peak encoder tape 13 will deliver small peaks, whenever the second segments 19 pass the sensor. A chamfer encoder tape 14 can more easily be manufactured, is more robust and will also deliver good signals with a sensor. The curved encoder tape 15 is the most flexible design and allows strong thermal expansion. It may have a sinusoidal curve.

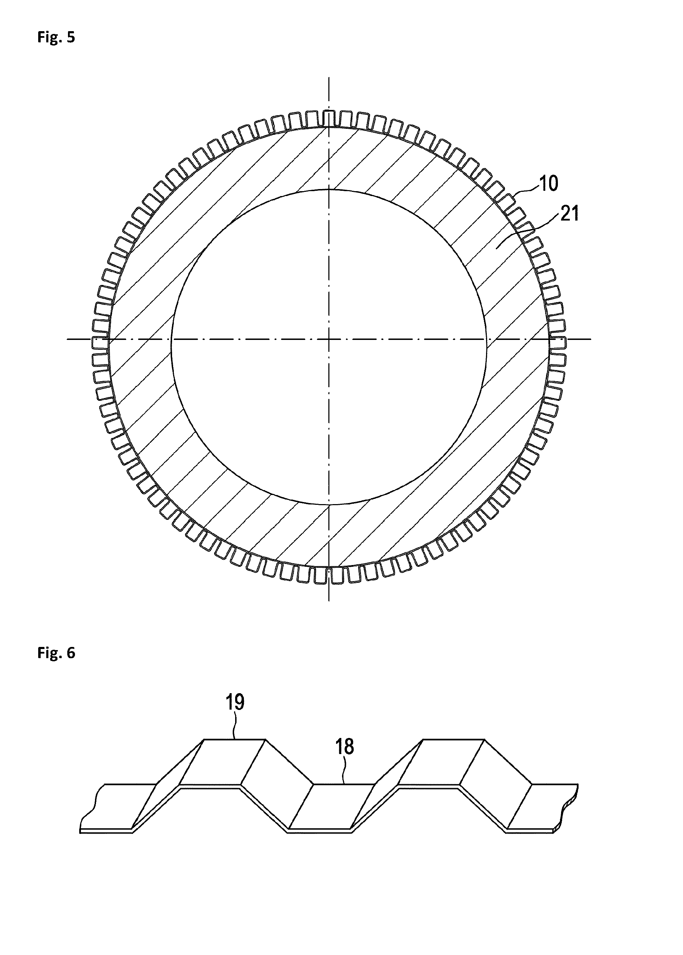

Figure 5 shows an encoder tape 10 mounted to a gantry 21 of a CT scanner. It preferably is mounted circumferentially.

In figure 6 a perspective view of the position encoder tape is shown, having first segments 18 and second segments 19.

### List of reference numerals

- 10: encoder tape
- 11: adhesive tape
- 12: symmetrical rectangular encoder tape
- 13: peak encoder tape
- 14: chamfer encoder tape
- 15: curved encoder tape
- 18: first segments
- 19: second segments
- 20: body of the rotating device
- 21: CT scanner gantry
- 30: magnetic sensor

## Claims

1. Position encoder gauge (10) having second segments (19) and different first segments (18) to be detected by a sensor (30), the second segments (19) having a different distance to the sensor (30), when passing the sensor, compared to the first segments (18),
**characterized in, that**
the position encoder gauge comprises of a tape comprising magnetic material which being formed into second segments (19) and the first segments (18).

2. Position encoder gauge according to claim 1,
**characterized in, that**
the tape is a metal tape.

3. Position encoder gauge according to claim 1 or 2,
**characterized in, that**
the tape forms a symmetrical rectangular pattern.

4. Position encoder gauge according to claim 1 or 2,
**characterized in, that**
the tape forms an asymmetrical rectangular pattern forming peaks.

5. Position encoder gauge according to claim 1 or 2,
**characterized in, that**
the tape forms a chamfer pattern.

6. Position encoder gauge according to claim 1 or 2,
**characterized in, that**
the tape forms a curved pattern.
